# EUROPEAN PATENT APPLICATION

(11) **EP 3 556 533 A1**
(43) Date of publication of application: **23.10.2019**
(21) Application number: 17880379.7
(22) Date of filing: 14.12.2017
(51) Int. Cl.: B29C 45/27

(54) **PLATE-SHAPED MOLDED BODY MANUFACTURING METHOD, MOLD, AND RUNNER**

(30) Priority: 15.12.2016 JP 2016243453
(71) Applicant: Sumitomo Chemical Company, Limited, Tokyo 104-8260 (JP)
(72) Inventor: KOMATSU, Shintaro, Tsukuba-shi Ibaraki 3050045 (JP); SAKAI, Taiga, Tsukuba-shi Ibaraki 300-3294 (JP); MAEDA, Mitsuo, Tokyo 104-8260 (JP)
(74) Representative: Vossius & Partner Patentanwälte Rechtsanwälte mbB
(86) International application number: PCT/JP2017/044893
(87) International publication number: WO 2018/110646

(57) **Abstract**

The present invention provides a plate-shaped molded body manufacturing method having a step of injection-molding a liquid crystal polymer resin composition using a mold that satisfies conditions (i) to (iii) below. (i) The mold includes a cavity and a gate that is connected to the cavity, the cavity has a shape that corresponds to the plate-shaped molded body, and the gate is provided across approximately an entire width of one side of the cavity, (ii) The mold includes a runner that is connected to the gate, and the runner extends along approximately an entire width of the gate. (iii) In a cross section perpendicular to an extension direction of the runner, a shape of an inside space of the runner has a wedge-shaped portion in which a width of the inside space gradually decreases toward the gate.

## Description

### Technical Field

The present invention relates to a plate-shaped molded body manufacturing method, a mold, and a runner.

Priority is claimed on Japanese Patent Application No. 2016-243453, filed on December 15, 2016, the content of which is incorporated herein by reference.

### Background Art

Molded bodies for which a liquid crystal polymer is used as a forming material have high strength, high heat resistance, and high dimensional accuracy. Therefore, liquid crystal polymers are used as a forming material of electronic components having a relatively small size such as connectors or relay components (for example, refer to Patent Document 1). Molded bodies for which a liquid crystal polymer is used as a forming material are molded by injection molding.

### Citation List

### Patent Literature

[Patent Document 1] Japanese Unexamined Patent Application, First Publication No. H07-126383

### Summary of Invention

### Technical Problem

In recent years, studies have been conducted regarding the use of liquid crystal polymers as a forming material of large-sized molded bodies demanding strength by taking advantage of the above-described characteristics of liquid crystal polymers.

As the "large-sized molded bodies", exterior components for electronic goods or vehicles (cars) are exemplary examples.

Hereinafter, exterior components for electronic goods or vehicles will be collectively referred to as "outer plates" in some cases. In addition, among large-sized molded bodies, molded bodies having a low front-view height in comparison to the planar-view shape are referred to, particularly, as "plate-shaped molded bodies" in some cases. For example, among molded bodies that are inscribed in a cuboid having sides with three different lengths of a (height), b (length), and c (width) (a<b<c), molded bodies having b that is ten or more times a are regarded as "plate-shaped molded bodies".

The present invention has been made in consideration of the above-described circumstance, and an object of the present invention is to provide a plate-shaped molded body manufacturing method by which plate-shaped molded bodies can be preferably molded using a composition including a liquid crystal polymer. In addition, another object of the present invention is to provide a mold and a runner with which the plate-shaped molded body manufacturing method can be preferably carried out.

### Solution to Problem

As a result of studying the use of liquid crystal polymers as a forming material of plate-shaped molded bodies, the present inventors found that, when a liquid crystal polymer is used as a forming material and an outer plate is molded by injection molding, a molded body to be obtained warps significantly and is incapable of withstanding being used.

It is known that, in a liquid crystal polymer, molecular chains are likely to be oriented in a flow direction of a molten resin that is the molten liquid crystal polymer during injection molding. In addition, it is known that, in molded bodies for which the liquid crystal polymer is used as a forming material, the degree of shrinkage differs in the flow direction of the molten resin and in a direction perpendicular to the flow direction of the molten resin due to the above-described orientation of molecular chains.

In the related art, in small-sized molded bodies for which the liquid crystal polymer is used as a forming material, warping attributed to the difference in the degree of shrinkage from that in the flow direction of the molten resin has not been a problem. However, in large-sized molded bodies such as plate-shaped molded bodies, the difference in the degree of shrinkage is likely to appear as the warping of the molded bodies.

As a result of a variety of studies by the present inventors with attention on the above-described problem, the present inventors found that, in the case of using the liquid crystal polymer as a forming material of a plate-shaped molded body, the problem can be solved by preferably controlling the flow direction of the molten resin and completed the present invention.

In order to achieve the above-described object, the present invention employed the following.
[1] An aspect of the present invention provides a plate-shaped molded body manufacturing method having a step of injection-molding a liquid crystal polymer resin composition using a mold that satisfies conditions (i) to (iii) below.
   (i) The mold includes a cavity and a gate that is connected to the cavity, the cavity has a shape that corresponds to the plate-shaped molded body, and the gate is provided across approximately an entire width of one side of the cavity.
   (ii) The mold includes a runner that is connected to the gate, and the runner extends along approximately an entire width of the gate.
   (iii) In a cross section perpendicular to an extension direction of the runner, a shape of an inside space of the runner has a wedge-shaped portion in which a width of the inside space gradually decreases toward the gate.
[2] In the manufacturing method of the aspect of the present invention, the mold may have a plurality of sprues through which a resin is supplied to the runner.
[3] In the manufacturing method of the aspect of the present invention, a direction in which the resin flows into the runner from the sprues and a direction in which the resin flows into the cavity from the runner may intersect with each other.
[4] In the manufacturing method of the aspect of the present invention, the mold may have a pin that protrudes into the cavity, and the gate may be provided at, between a pair of facing sides of the cavity in a planar view, one side farther from the pin.
[5] In the manufacturing method of the aspect of the present invention, the pin may be flat in a planar view, and the mold may have the gate in a long-axis direction of the pin in the planar view.
[6] In the manufacturing method of the aspect of the present invention, the pin may swell and bend toward the gate in a planar view.
[7] In the manufacturing method of the aspect of the present invention, the mold may have a plurality of the pins, and at least some of the plurality of pins may be arrayed in an extension direction of the gate.
[8] Another aspect of the present invention provides a mold that satisfies conditions (i) to (iii) below.
   (i) The mold includes a cavity and a gate that is connected to the cavity, the cavity has a shape that corresponds to the plate-shaped molded body, and the gate is provided across approximately an entire width of one side of the cavity.
   (ii) The mold includes a runner that is connected to the gate, and the runner extends along approximately an entire width of the gate.
   (iii) In a cross section perpendicular to an extension direction of the runner, a shape of an inside space of the runner has a wedge-shaped portion in which a width of the inside space gradually decreases toward the gate.
[9] Still another aspect of the present invention provides a runner that is used in a mold for forming a plate-shaped molded body, in which the runner extends along approximately an entire width of one side of a cavity of the mold and is connected to a gate that is provided across approximately the entire width of the one side, and a shape of an inside space in a cross section perpendicular to the extension direction has a wedge-shaped portion in which a width of the inside space gradually decreases toward the gate.

### Advantageous Effects of Invention

According to the present invention, it is possible to provide a plate-shaped molded body manufacturing method by which plate-shaped molded bodies can be preferably molded using a composition including a liquid crystal polymer. It is possible to provide a mold and a runner with which the plate-shaped molded body manufacturing method can be preferably carried out.

### Brief Description of Drawings

FIG. 1 is a planar pattern diagram showing flows of a resin at the time of molding a rectangular outer plate.
FIG. 2 is a planar pattern diagram showing an outer plate manufacturing method of the present embodiment.
FIG. 3 is a schematic explanatory view of a mold that is preferably used for the manufacturing of an outer plate of the present embodiment.
FIG. 4 is a planar pattern diagram that shows the flow of a molten resin in the mold.
FIG. 5 is a planar pattern diagram that shows the flow of the molten resin in the mold.
FIG. 6 is a planar pattern diagram of the mold having sub gates.
FIG. 7 is a planar pattern diagram that shows the flow of the molten resin in the mold.
FIG. 8 is a schematic explanatory view of a modification example of the mold that is preferably used for the manufacturing of an outer plate of the present embodiment.
FIG. 9 is a planar pattern diagram showing the outer plate manufacturing method of the present embodiment.
FIG. 10 is a planar pattern diagram showing the outer plate manufacturing method of the present embodiment.
FIG. 11 is a pattern diagram showing a PC chassis that is molded in an example.
FIG. 12 is a pattern diagram showing a location of a gate in the PC chassis that is molded in the example.
FIG. 13 is a pattern diagram showing a PC chassis that is molded in an example.
FIG. 14 is a pattern diagram showing a location of a gate in the PC chassis that is molded in the example.
FIG. 15 is an arrow cross-sectional view in a direction of a line A-A in FIG. 12 or 14.
FIG. 16 is a pattern diagram showing an evaluation location of the PC chassis that is molded in the example.

### Description of Embodiments

### [Plate-shaped molded body manufacturing method]

An aspect of the present invention provides a plate-shaped molded body manufacturing method having a step of injection-molding a liquid crystal polymer resin composition using a mold that satisfies conditions (i) to (iii) below.
(i) The mold includes a cavity and a gate that is connected to the cavity, the cavity has a shape that corresponds to the plate-shaped molded body, and the gate is provided across approximately an entire width of one side of the cavity.
(ii) The mold includes a runner that is connected to the gate, and the runner extends along approximately an entire width of the gate.
(iii) In a cross section perpendicular to an extension direction of the runner, a shape of an inside space of the runner has a wedge-shaped portion in which a width of the inside space gradually decreases toward the gate.

The liquid crystal polymer resin composition will be described below. Hereinafter, the plate-shaped molded body manufacturing method will be sequentially described.

In the present embodiment, "the plate-shaped molded body" refers to a molded body having a low front-view height in comparison to the planar-view shape. For example, among molded bodies that are inscribed in a cuboid having sides with three different lengths of a (height), b (length), and c (width) (a<b<c), molded bodies having b that is ten or more times a are regarded as "plate-shaped molded bodies".

"Outer plates" are regarded as "the plate-shaped molded body".

In the present embodiment, "outer plates" refer to exterior components for electronic goods or vehicles (cars). The plate-shaped molded body manufacturing method of the present embodiment is used to manufacture outer plates.

Here, in a case where it is intended to injection-mold a large-sized plate-shaped molded body using an ordinary resin composition, it can be considered to use a mold having gates for injection molding set at a plurality of points in a planar view and mold the molded body by injecting the resin from the gates at the plurality of points.

In the present embodiment, "approximately the entire width" refers to the fact that, for example, in a case where the planar-view shape of the cavity is a rectangular shape, approximately the entire width is 90% or more, preferably 95% or more, and more preferably 99% or more of the length of a side of the rectangular shape (=the entire width).

In addition, "approximately the entire width" of the plate-shaped molded body refers to the fact that, as the plate-shaped molded body, a cuboid having sides with three different lengths of a (height), b (length), and c (width) (a<b<c) is imagined and the approximately the entire width is, for example, 90% or more, preferably 95% or more, and more preferably 99% or more of c.

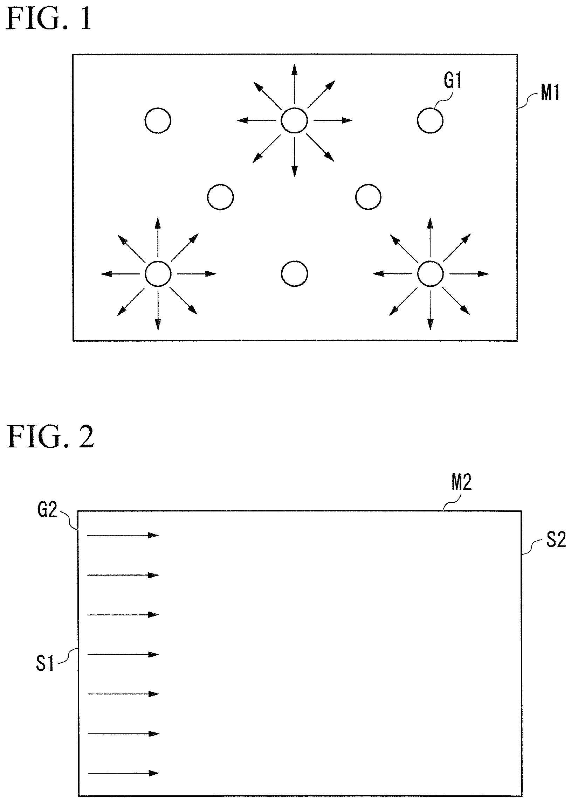

FIG. 1 is a planar pattern diagram showing flows of a resin at the time of molding a rectangular plate-shaped molded body using a mold having a plurality of set gates. In a mold M1, a molten resin injected from a plurality of gates G1 flows in the directions marked with arrows, is oriented, and cures.

The resin composition including a liquid crystal polymer has (i) a property that the liquid crystal polymer in the molten resin is likely to be oriented in the flow directions and (ii) a property that the liquid crystal polymer is likely to cure immediately after the flow of the molten resin stops.

"The resin composition including a liquid crystal polymer" corresponds to "the liquid crystal polymer resin composition" in the present invention.

When molding using the above-described liquid crystal polymer resin composition and the above-described mold for forming a large-sized plate-shaped molded body is considered, the occurrence of a phenomenon as described below is assumed.

First, in the molten resin that radially spreads from the plurality of point-shaped gates respectively, the liquid crystal polymer is respectively oriented in the flow directions. As a result of the radial spreading of the molten resin from the plurality of point-shaped gates, there is no regularity in the orientation directions of the liquid crystal polymer from the viewpoint of the entire molten resin injected into the mold. Hereinafter, the above-described orientation state will be referred to as "the irregular orientation throughout the entire molded body".

In the molten resin that has radially spread, when the flow of the molten resin stops the liquid crystal polymer begins to cure in the irregular orientation throughout the entire molded body. As a result, it is considered that, in a plate-shaped molded body to be obtained, internal stress is likely to remain in irregular directions throughout the entire molded body and the molded body is likely to warp significantly.

As a result of studies regarding the above-described problem, the present inventors found a manufacturing method in which warping can be reduced by controlling the injection direction of the molten resin with attention on the gate shape.

FIG. 2 is a planar pattern diagram showing the plate-shaped molded body manufacturing method of the present embodiment. FIG. 2 is a view that corresponds to FIG. 1.

As shown in the drawings, in the plate-shaped molded body manufacturing method of the present embodiment, a gate G2 is set throughout an entire region of a side S1 of a mold M2 in a planar view. In addition, in the plate-shaped molded body manufacturing method of the present embodiment, the molten resin is caused to flow from the gate G2 to a side S2 that is opposite to the side S1. Therefore, a flow direction of the molten resin becomes a uniform direction from the gate G2 toward the side S2. In the molten resin that flows as described above, the orientation direction of the liquid crystal polymer becomes a uniform direction.

Furthermore, in the plate-shaped molded body manufacturing method of the present embodiment, a state in which the residence of the molten resin is suppressed until the mold M2 is fully filled with the molten resin and the molten resin flows, in the flow direction of the resin, from the side S1 to the opposite side S2 of the mold M2 at all times is formed.

Therefore, in a plate-shaped molded body to be obtained, the orientation direction of the liquid crystal polymer becomes a uniform direction, and an internal stress generation direction is controlled to be uniform. As a result, in plate-shaped molded bodies to be manufactured using the plate-shaped molded body manufacturing method of the present embodiment, warping is reduced.

### [Mold and runner]

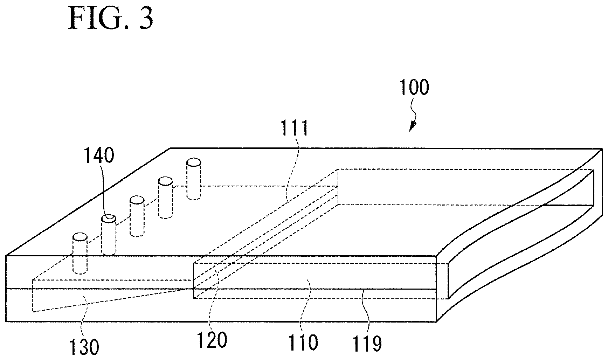

FIG. 3 is a schematic explanatory view of a mold that is preferably used for the manufacturing of a plate-shaped molded body of the present embodiment. The drawing is a partial cross-sectional view of the mold. An aspect of the present invention provides a mold that satisfies conditions (i) to (iii) below.
(i) The mold includes a cavity and a gate that is connected to the cavity, the cavity has a shape that corresponds to the plate-shaped molded body, and the gate is provided across approximately an entire width of one side of the cavity.
(ii) The mold includes a runner that is connected to the gate, and the runner extends along approximately an entire width of the gate.
(iii) In a cross section perpendicular to an extension direction of the runner, a shape of an inside space of the runner has a wedge-shaped portion in which a width of the inside space gradually decreases toward the gate.

A mold 100 shown in FIG. 3 has a cavity 110, a gate 120, a runner 130, and sprues 140.

The cavity 110 is a space having a shape that corresponds to a plate-shaped molded body to be molded. In detail, the cavity 110 is a space surrounded by an inner wall of the mold 100. The inner wall of the mold 100 has a shape that is complementary to an outer form of the plate-shaped molded body to be molded. In the plate-shaped molded body manufacturing method of the present embodiment, when the molten resin that has flowed into the cavity 110 solidifies in the cavity 110, the shape of the inner wall of the mold 100 in contact with the cavity 110 is transferred, and a plate-shaped molded body having an outer form with a shape complementary to the shape of the inner wall is obtained.

In the drawing, the cavity 110 is shown to have an approximately rectangular shape in a planar view. The plate-shaped molded body molded in the cavity 110 can be removed by, for example, dividing the mold 100 into two (upper and lower) parts along a parting line 119.

The gate 120 is provided along approximately the entire width of a side 111 of the cavity 110. The gate 120 needs to be provided at a location at which the flow distance in the cavity 110 of the molten resin that flows into the cavity 110 through the gate 120 becomes short.

The gate 120 needs to be provided at a side that becomes longest in the planar-view shape of the cavity 110. "The planar-view shape of the cavity 110" is identical to the projected shape of the plate-shaped molded body to be molded.

For example, in a case where the planar-view shape of the cavity 110 is rectangular, it is necessary to provide the gate 120 along a long side and cause the molten resin to flow in a short-side direction in the mold. When the gate 120 is provided at the above-described location, the flow distance of the molten resin becomes short.

In addition, in a case where there is no side formed of a straight line in the planar-view shape of the cavity 110, the gate 120 needs to be provided at a side that is as close to a straight line as possible. When the gate 120 is provided at the above-described location, the flow directions of the molten resin become similar, and the orientation directions of the resin cured in the cavity are likely to become similar.

The runner 130 is provided across the entire area of the gate 120 along an extension direction of the gate 120 and is connected to the gate 120. The inside space of the runner 130 has a wedge-shaped portion in which the width gradually decreases toward the gate 120 in a cross section perpendicular to an extension direction of the runner 130. The thinnest portion of the runner 130 is a portion that is connected to the gate 120.

The sprues 140 are provided at a plurality of places along the extension direction of the runner 130. The extension direction of the runner 130 is identical to the extension direction of the gate 120. As shown in the drawing, a direction in which the resin flows into the runner 130 from the sprues 140 and a direction in which the resin flows into the cavity 110 from the runner 130 need to intersect with each other. From the respective sprues 140, the molten resin that has been melted in an injection molding machine, not shown, flows in. The molten resin flows into the runner 130 through the respective sprues 140.

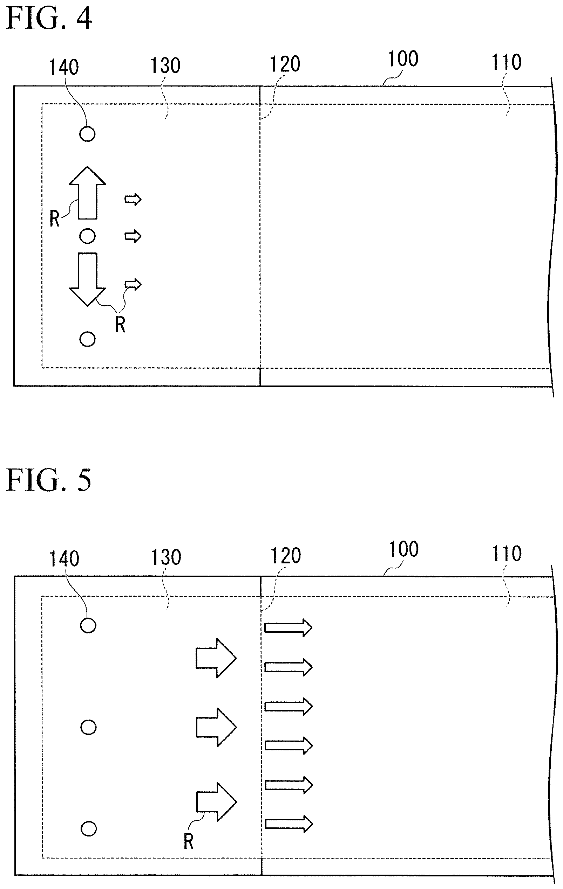

FIG. 4 and 5 are planar pattern diagrams that show the flow of the molten resin at the time of injecting the molten resin into the mold 100. In the drawing, white arrows represented by a reference sign R indicate the flowing molten resin. The sizes of the white arrows indicate the flow amounts of the flowing resin, and a larger white arrow indicates a larger flow amount.

In the case of manufacturing a molded body using the mold 100, a molten resin R that is injected into the mold 100 from the injection molding machine flows as described below.

First, as shown in FIG. 4, the molten resin R injected from the plurality of sprues 140 spreads into the inside of the runner 130. At this time, the inside space of the runner 130 is designed to have a width that gradually decreases in a wedge shape and a pressure loss that gradually increases. Therefore, the molten resin R flows in a direction in which the pressure loss is smaller. That is, the molten resin R, first, flows in the extension direction of the gate 120 while filling the runner 130 instead of flowing toward the gate 120.

In the following description, a direction from the sprues 140 toward the gate 120 will be simply referred to as "the gate direction" in some cases.

The present inventors found through studies that, in runners that are connected to ordinarily-known film gates, a portion in which the molten resin injected into the runner stops is likely to be generated, the molten resin solidifies in the runner, and poor molding is likely to be caused. What has been described above will be described below.

In an ordinarily-used film gate, the runner does not have a wedge shape. Therefore, the molten resin that flows in the gate direction receives an abrupt pressure loss when flowing into the gate from the runner. Therefore, in the case of using the film gate, first, the molten resin flows in the extension direction of the runner, and the flow of the molten resin in the gate direction is likely to stop.

However, the melt viscosity of the liquid crystal polymer highly relies on the shear velocity. Therefore, when the flow velocity of the molten resin decreases and the shear velocity decreases, the melt viscosity of the molten resin of the liquid crystal polymer abruptly increases, and the reflow of the molten resin becomes extremely difficult. In a region in which the flow of the resin stops as described above, the solidification of the resin is accelerated. Therefore, when the flow velocity of the molten resin in the gate direction decreases in the case of using the film gate, the solidification of the resin is accelerated along the gate, and the resin does not flow in the gate direction.

On the other hand, in the runner 130 of the mold 100 that is used in the present embodiment, the sprues 140 are formed in a direction that intersects with both the extension direction of the gate 120 and the gate direction. Therefore, the molten resin injected from the sprues 140, first, flows to evenly spread both in the extension direction of the gate 120 and the gate direction in the runner 130.

Here, the runner 130 of the mold 100 that is used in the present embodiment has a wedge shape in which the width of the inside space gradually decreases toward the gate 120. Therefore, the pressure loss that the molten resin flowing in the gate direction receives gradually increases as the width of the inside space decreases. As described above, the molten resin that flows in the gate direction in the runner 130 does not reach the gate 120 within a short period of time; however, instead, the flow does not easily stop. Therefore, in the runner 130, the resin does not easily solidify during the injection of the molten resin, and the flow of the resin in the gate direction is maintained.

Until the inside space of the runner 130 is filled with the molten resin R, in the inside of the runner 130, there is a place in which the pressure loss becomes smaller so that the molten resin R does not pass through the gate 120. Therefore, the molten resin R is not injected into the cavity 110 from the gate 120 until the runner 130 is filled.

After that, as shown in FIG. 5, when the inside of the runner 130 is filled with the molten resin R, the molten resin R is injected into the cavity 110 at the same time from the entire region of the gate 120. Therefore, in the cavity 110, the orientation direction of the molten resin R is likely to be determined in one direction, and it becomes easy to mold a plate-shaped molded body in a state in which warping is reduced.

In a case where a plate-shaped molded body to be molded has a large size, generally, the molten resin is injected from a plurality of gates that is communicated with the cavity 110. In contrast, in the plate-shaped molded body manufacturing method of the present embodiment, the molten resin R is injected from the gate 120 provided at one end of the cavity 110, and the molten resin R is caused to flow in one direction. Therefore, in a case where a plate-shaped molded body to be molded has a large size, there is a concern that the molten resin R may be cooled and solidified until the front end (the front end portion in the flow direction) of the molten resin R that flows in the cavity 110 reaches the end portion of the cavity 110.

In such a case, the molten resin R needs to be injected from a dot-shaped sub gate that is communicated with the cavity 110 using a mold having the sub gate.

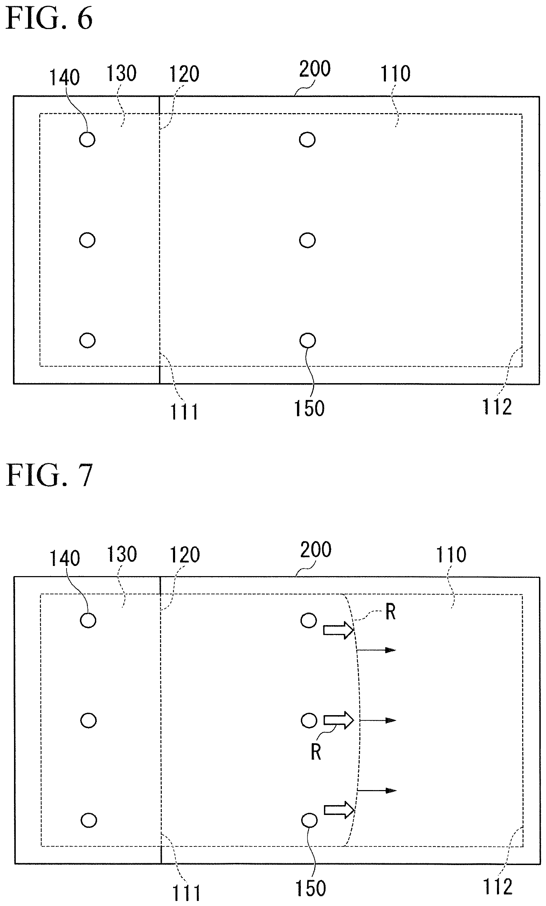

FIG. 6 is a planar pattern diagram of a mold 200 having sub gates 150.

As shown in FIG. 6, the mold 200 has a plurality of sub gates 150 that is communicated with the cavity 110. The sub gates 150 are provided to be arrayed in the same direction as the extension direction of the gate 120 between the side 111 provided with the gate 120 and an opposite side 112. The sub gates 150 may also be provided in a plurality of rows in the same array direction.

In the case of molding a plate-shaped molded body using the above-described mold 200, it is necessary to begin the injection of the molten resin R from the sub gates 150 after the front end of the molten resin R that has been injected into the mold 200 from the sprues 140 passes through the location of the sub gates 150 in a planar view as shown in FIG. 7. The molten resin R that is injected from the gate 120 forms a flow of the resin from the side 111 toward the side 112. Therefore, the molten resin R that is injected from the sub gates 150 also flows to the opposite side 112 in accordance with the flow of the molten resin that is injected from the gate 120. Therefore, the orientation of the molten resin R is not easily disarrayed, and warping is reduced at the time of molding a large-sized plate-shaped molded body.

When a plate-shaped molded body is manufactured using the above-described manufacturing method, the molten resin flows in one direction, and thus irregular orientations are suppressed. Therefore, according to the plate-shaped molded body manufacturing method of the present embodiment, it is possible to manufacture a plate-shaped molded body in which warping is reduced.

### [Modification example]

In the plate-shaped molded body manufacturing method of the present embodiment, it is possible to use a variety of molds as long as a plate-shaped molded body can be manufactured.

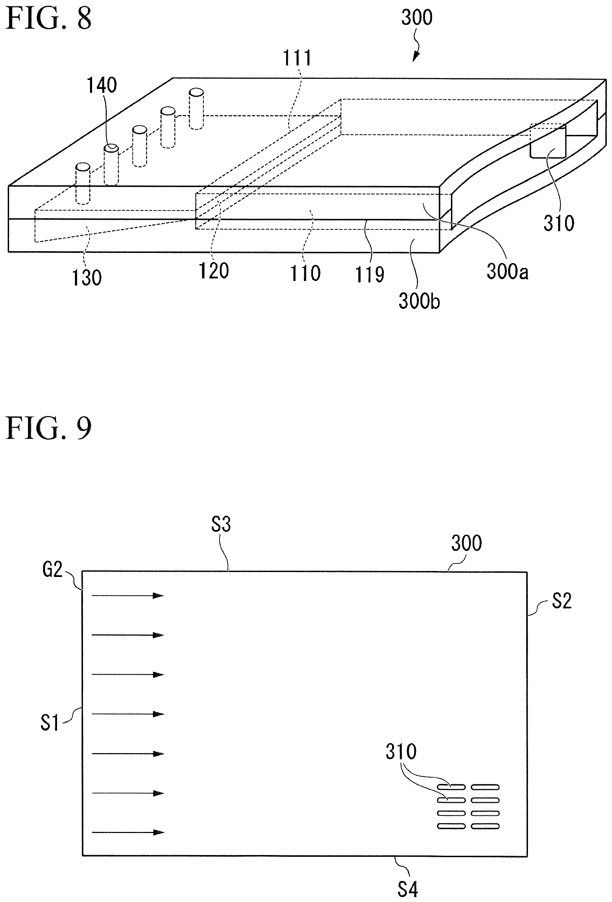

FIG. 8 is a schematic explanatory view showing another example of the mold that is preferably used for the manufacturing of a plate-shaped molded body of the present embodiment. The drawing is a partial cross-sectional view of the mold and a view that corresponds to FIG. 3. A mold 300 shown in the drawing has the cavity 110, the gate 120, the runner 130, the sprues 140, and pins 310.

The mold 300 is configured of a pair of mold members 300a and 300b. A place at which the mold members 300a and 300b combine together becomes the parting line 119.

The pin 310 is a columnar substance provided in the cavity 110 of the mold 300. The planar-view shape of the pin 310 needs to swell and curve toward a gate 120 side.

The number of the pins 310 being formed in the mold 300 may be one or more. In a case where the mold 300 has two or more pins 310, the plurality of pins 310 may be provided together.

The pins 310 are in contact with both the mold member 300a and the mold member 300b in a state in which the mold member 300a and the mold member 300b combine together and configure the mold 300. The pins 310 may be formed in any of the mold member 300a and the mold member 300b.

When a plate-shaped molded body is manufactured using the above-described mold 300, in the plate-shaped molded body to be obtained, through holes having a shape complementary to the shape of the pin 310 are formed at locations provided with the pins 310.

FIG. 9 is a planar pattern diagram showing a modification example of the plate-shaped molded body manufacturing method of the present embodiment. FIG. 9 is a view that corresponds to FIG. 2.

As shown in the drawing, in the plate-shaped molded body manufacturing method of the present embodiment, the gate G2 is set across the entire region of the side S1 of the mold 300 in a planar view. In addition, in the plate-shaped molded body manufacturing method of the present embodiment, the molten resin is caused to flow from the gate G2 to a side S2 that is opposite to the side S1. At this time, as the side that is provided with the gate G2 in the mold 300, a side far from the locations at which the pins 310 are formed in the mold 300 is selected.

Here, in the case of using the mold 300 having a rectangular planar-view shape, two "far sides" at which the gate G2 can be provided can be considered as long as the pins 310 are not provided in the center of the mold 300 in a planar view. That is, in FIG. 9, the side S1 and a side S3 correspond to the "far sides".

In such a case, the side at which the gate G2 is provided needs to be selected depending on the shape of the pin 310.

For example, as shown in FIG. 9, in a case where the shape of the pin 310 is flat in a planar view, a side that is present in a long-axis direction of the flat pin 310 needs to be selected as the "far side". In this case, the planar-view shape of the pin 310 needs to swell and curve toward the gate G2 side.

When a plate-shaped molded body is manufactured using the mold 300 as shown in FIG. 9, the flow direction of the molten resin becomes one direction from the gate G2 toward the side S2. In the molten resin that flows as described above, the orientation direction of the liquid crystal polymer becomes a uniform direction.

Furthermore, in the plate-shaped molded body manufacturing method of the present embodiment, it is formed a state in which the residence of the molten resin is suppressed until the mold 300 is fully filled with the molten resin. And it is formed a state in which the molten resin flows, in the flow direction of the resin, from the side S1 to the opposite side S2 of the mold 300 at all times.

Therefore, in a plate-shaped molded body to be obtained, the orientation direction of the liquid crystal polymer becomes a uniform direction, and an internal stress generation direction is controlled to be uniform. As a result, in plate-shaped molded bodies to be manufactured using the plate-shaped molded body manufacturing method of the present embodiment, warping is reduced.

Additionally, in the case of the mold 300 as shown in FIG. 9, the molten resin that is injected from the gate G2 and flow is likely to flow around to a downstream side (a downstream side of the flow direction of the molten resin) of the pins 310. Therefore, in the plate-shaped molded body manufacturing method using the mold 300, poor molding is not caused, and an intended plate-shaped molded body is easily obtained.

In addition, in the mold 300 shown in FIG. 9, the gate G2 is provided at the side S1 far from the locations at which the pins 310 are formed. Therefore, burrs are not easily generated in a through hole portion of a plate-shaped molded body to be obtained.

In a case where the mold 300 has 10 or more pins 310 and the 10 or more pins 310 are arrayed in a row, the plurality of pins 310 needs to be arrayed in the same direction as the extension direction of the gate G2. In addition, in a case where the shape of the pin 310 is flat in a planar view, the gate G2 needs to be provided in the long-axis direction of the respective flat pins 310 in a planar view.

In addition, in a case where the mold 300 has the plurality of pins 310, the plurality of pins 310 may be provided together at one place or may be provided in a dispersed manner at several places. In a plate-shaped molded body that is manufactured using the above-described mold 300, grid holes are provided at locations overlapping the plurality of pins 310.

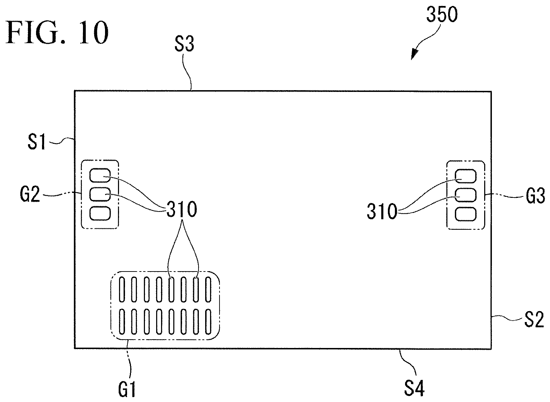

In a mold 350 shown in FIG. 10, the plurality of pins 310 gathers together at several places (three places in FIG. 10) and forms pin groups G1, G2, and G3 when seen in a planar view. In a plate-shaped molded body to be manufactured using the mold 350, grid holes are provided at three places that correspond to the pin groups G1, G2, and G3.

In this case, in an intended plate-shaped molded body, it is preferably to designate a direction in which a weld portion is not generated between grid holes having the shortest pitch among the grid holes in the three places as the flow direction of the resin and it is preferably to set the "far side" with reference to the pins 310 from which the grid holes are obtained. In a case where there is a plurality of the grid holes having the shortest pitch in the three places, a side corresponding to a grid hole that becomes farthest from the gate in the case of using the "far side" as the gate location needs to be set as the "far side" of the plate-shaped molded body.

Here, the "weld portion" refers to a portion in which portions at which two or more flows of the liquid crystal polymer pressed into the mold at the time of injection-molding the liquid crystal polymer are integrated by fusion in the obtained molded body. A typical example of the weld portion can be found in a molded body having an opening portion.

In the mold 350 shown in FIG. 10, in a case where, among the pin groups G1, G2, and G3, the pin group G1 is most important, the gate needs to be provided at a side S3 that is a side far from the pin group G1 in the mold 350 according to the above-described way of thinking.

The plate-shaped molded body as shown in FIGS. 9 and 10 is preferable as a PC chassis.

### (Liquid crystal polymer)

In the liquid crystal polymer resin composition that is used in the plate-shaped molded body manufacturing method of the present embodiment, a liquid crystal polymer is included. The liquid crystal polymer has repeating units represented by General Formulae (1), (2), and (3) below.

(1) -O-Ar¹-CO-

(2) -CO-Ar²-CO-

(3) -X-Ar³-Y-

(In the formulae, Ar¹ is a phenylene group, a naphthylene group, or a biphenylene group; Ar² and Ar³ each are independently a phenylene group, a naphthylene group, a biphenylene group, or a group represented by General Formula (4) below; X and Y each is independently an oxygen atom or an imino group; one or more hydrogen atoms in Ar¹, Ar², and Ar³ each may be independently substituted with a halogen atom, an alkyl group, or an aryl group.)

(4) -Ar⁴-Z-Ar⁵-

(In the formula, Ar⁴ and Ar⁵ each are independently a phenylene group or a naphthylene group; Z is an oxygen atom, a sulfur atom, a carbonyl group, a sulfonyl group, or an alkylidene group.)

In General Formulae (1) to (3), as the halogen atom capable of substituting one or more hydrogen atoms in the groups represented by Ar¹, Ar², or Ar³, a fluorine atom, a chlorine atom, a bromine atom, and an iodine atom are exemplary examples.

In General Formulae (1) to (3), as the alkyl group capable of substituting one or more hydrogen atoms in the groups represented by Ar¹, Ar², or Ar³, a methyl group, an ethyl group, an n-propyl group, an isopropyl group, an n-butyl group, an isobutyl group, a sec-butyl group, a tert-butyl group, an n-hexyl group, an n-heptyl group, a 2-ethylhexyl group, an n-octyl group, an n-nonyl group, an n-decyl group, and the like are exemplary examples. The number of carbon atoms in the alkyl group is preferably 1 to 10.

In General Formulae (1) to (3), as the aryl group capable of substituting one or more hydrogen atoms in the groups represented by Ar¹, Ar², or Ar³, monocyclic aromatic groups such as a phenyl group, an o-tolyl group, an m-tolyl group, and a p-tolyl group and fused-ring aromatic groups such as a 1-naphthyl and a 2-naphthyl group are exemplary examples. The number of carbon atoms in the aryl group is preferably 6 to 20.

In General Formulae (1) to (3), in a case where one or more hydrogen atoms in the group represented by Ar¹, Ar², or Ar³ are substituted with the above-described groups, the number of hydrogen atoms substituted is preferably one or two and more preferably one in each of the groups represented by Ar¹, Ar², or Ar³ independently.

In General Formula (4), examples of the alkylidene group include a methylene group, an ethylidene group, an isopropylidene group, an n-butylidene group, a 2-ethylhexylidene group, and the like. The number of carbon atoms in the alkylidene group is preferably 1 to 10.

As the repeating unit represented by General Formula (1), a repeating unit in which Ar¹ is a 1,4-phenylene group (a repeating unit derived from p-hydroxybenzoic acid) and a repeating unit in which Ar¹ is a 2,6-naphthylene group (a repeating unit derived from 6-hydroxy-2-naphthoic acid) are preferable, and a repeating unit in which Ar¹ is a 2,6-naphthylene group is more preferable.

In the present specification, "derivation" refers to the fact that a raw material monomer changes in the chemical structure only for polymerization and does not change in any other structures.

As a monomer that forms the repeating unit represented by General Formula (1), 2-hydroxy-6-naphthoic acid, p-hydroxybenzoic acid, and 4-(4-hydroxyphenyl)benzoic acid are exemplary examples. Furthermore, as the monomer that forms the repeating unit represented by General Formula (1), monomers having a benzene ring or a naphthalene ring in which a hydrogen atom is substituted with a halogen atom or an alkyl group or aryl group having 1 to 10 carbon atoms are also exemplary examples. Furthermore, these monomers may be converted to an ester-forming derivative described below and then used as the monomer that forms the repeating unit represented by General Formula (1).

As the repeating unit represented by General Formula (2), a repeating unit in which Ar² is a 1,4-phenylene group (a repeating unit derived from terephthalic acid), a repeating unit in which Ar² is a 1,3-phenylene group (a repeating unit derived from isophthalic acid), a repeating unit in which Ar² is a 2,6-naphthylene group (a repeating unit derived from 2,6-naphthalenedicarboxylic acid), and a repeating unit in which Ar² is a diphenyl ether-4,4'-diyl group (a repeating unit derived from diphenyl ether-4,4'-dicarboxylic acid) are preferable. Furthermore, as the repeating unit represented by General Formula (2), a repeating unit in which Ar² is a 1,4-phenylene group and a repeating unit in which Ar² is a 1,3-phenylene group are more preferable.

As a monomer that forms the repeating unit represented by General Formula (2), 2,6-naphthalenedicarboxylic acid, terephthalic acid, isophthalic acid, and biphenyl-4,4'-dicarboxylic acid are exemplary examples. Furthermore, as the monomer that forms the repeating unit represented by General Formula (2), monomers having a benzene ring or a naphthalene ring in which a hydrogen atom is substituted with a halogen atom or an alkyl group or aryl group having 1 to 10 carbon atoms are also exemplary examples. Furthermore, these monomers may be converted to an ester-forming derivative described below and then used as the monomer that forms the repeating unit represented by General Formula (2).

As a monomer that forms the repeating unit represented by General Formula (3), a repeating unit in which Ar³ is a 1,4-phenylene group (a repeating unit derived from hydroquinone, p-aminophenol, or p-phenylenediamine) and a repeating unit in which Ar³ is a 4,4'-biphenylene group (a repeating unit derived from 4,4'-hydroxybiphenyl, 4-amino-4'-hydroxybiphenyl, or 4,4'-diaminobiphenyl) are preferable.

As the monomer that forms the repeating unit represented by General Formula (3), 2,6-naphthol, hydroquinone, resorcinol, and 4,4'-hydroxybiphenyl are exemplary examples. Furthermore, as the monomer that forms the repeating unit represented by General Formula (3), monomers having a benzene ring or a naphthalene ring in which a hydrogen atom is substituted with a halogen atom or an alkyl group or aryl group having 1 to 10 carbon atoms are also exemplary examples. Furthermore, these monomers may be converted to an ester-forming derivative described below and then used as the monomer that forms the repeating unit represented by General Formula (3).

As the monomer that forms the repeating unit represented by Formula (1), (2), or (3), an ester-forming derivative is preferably used in order to facilitate polymerization in a process for manufacturing a polyester. The ester-forming derivative refers to a monomer having a group that accelerates an ester-generating reaction. Specific examples thereof include highly reactive derivatives such as an ester-forming derivative in which a carboxylic acid group in the monomer molecule is converted to an acid halide or an acid anhydride or an ester-forming derivative in which a hydroxyl group in the monomer molecule is converted to a lower carboxylic acid ester group.

The amount of the repeating unit (1) in the liquid crystal polymer is preferably 30 mol% or more, more preferably 30 mol% or more and 80 mol% or less, still more preferably 40 mol% or more and 70 mol% or less, and particularly preferably 45 mol% or more and 65 mol% or less with respect to the total amount (100 mol%) of the repeating unit (1), the repeating unit (2), and the repeating unit (3).

The amount of the repeating unit (2) in the liquid crystal polymer is preferably 35 mol% or more, more preferably 10 mol% or more and 35 mol% or less, still more preferably 15 mol% or more and 30 mol% or less, and particularly preferably 17.5 mol% or more and 27.5 mol% or less with respect to the total amount (100 mol%) of the repeating unit (1), the repeating unit (2), and the repeating unit (3).

The amount of the repeating unit (3) in the liquid crystal polymer is preferably 35 mol% or more, more preferably 10 mol% or more and 35 mol% or less, still more preferably 15 mol% or more and 30 mol% or less, and particularly preferably 17.5 mol% or more and 27.5 mol% or less with respect to the total amount (100 mol%) of the repeating unit (1), the repeating unit (2), and the repeating unit (3).

That is, in the liquid crystal polymer, when the total of the repeating unit (1), the repeating unit (2), and the repeating unit (3) is set to 100 mol%, it is preferable that the content ratio of the repeating unit (1) is 30 mol% or more and 80 mol% or less, the repeating unit (2) is 10 mol% or more and 35 mol% or less, and the repeating unit (3) is 10 mol% or more and 35 mol% or less.

When the amount of the repeating unit (1) is in the above-described range, the liquid crystal polymer is likely to improve in melt fluidity, heat resistance, strength, and hardness.

In the liquid crystal polymer, the ratio of the amount of the repeating unit (2) to the amount of the repeating unit (3) is indicated by [the amount of the repeating unit (2)]/[the amount of the repeating unit (3)] (mol/mol) and is preferably 0.9/1 to 1/0.9, more preferably 0.95/1 to 1/0.95, and still more preferably 0.98/1 to 1/0.98.

The liquid crystal polymer respectively has repeating units including a 2,6-naphtylene group as the repeating unit (1), the repeating unit (2), and the repeating unit (3).

In addition, in the liquid crystal polymer, the amount of the repeating units including a 2,6-naphtylene group is 40 mol% or more with respect to the total (100 mol%) of all of the repeating units. When the amount of the repeating units including a 2,6-naphtylene group is 40 mol% or more, a liquid crystal polymer resin composition to be obtained becomes more favorable in fluidity during a melting process and becomes more suitable to a process of an electronic device chassis having a fine grid structure.

The number of each of the repeating units (1) to (3) in the liquid crystal polymer may be one or more independently. In addition, the liquid crystal polymer may have one or more repeating units other than the repeating units (1) to (3), and the amount thereof is preferably 0 mol% or more and 10 mol% or less and more preferably 0 mol% or more and 5 mol% or less of the total of all of the repeating units.

The liquid crystal polymer preferably has, as the repeating unit (3), a repeating unit in which X and Y each are an oxygen atom, that is, a repeating unit derived from a predetermined aromatic diol since the melt viscosity becomes low. In addition, the liquid crystal polymer more preferably has, as the repeating unit (3), only a repeating unit in which X and Y each are an oxygen atom.

The liquid crystal polymer is preferably manufactured by melt-polymerizing a raw material monomer that corresponds to the repeating unit configuring the liquid crystal polymer and solid-phase-polymerizing the obtained polymerized substance (prepolymer). In such a case, it is possible to manufacture a liquid crystal polymer that is favorable in terms of heat resistance, strength, and stiffness and has a high molecular weight with favorable operability. The melt polymerization may be carried out in the presence of a catalyst. As examples of the catalyst, metal compounds such as magnesium acetate, tin diacetate, tetrabutyl titanate, lead acetate, sodium acetate, and ammonium trioxide or nitrogen-containing heterocyclic compounds such as N,N-dimethylaminopyridine and N-methylimidazole are exemplary. As the catalyst that is used during the melt polymerization, a nitrogen-containing heterocyclic compound is preferable.

The flow-starting temperature of the liquid crystal polymer is preferably 270°C or higher, more preferably 270°C or higher and 400°C or lower, and still more preferably 280°C or higher and 380°C or lower. The liquid crystal polymer is more likely to improve in heat resistance, strength, and stiffness as the flow-starting temperature increases. However, when the flow-starting temperature of the liquid crystal polymer is too high, a high temperature is required to melt the liquid crystal polymer, and thus the liquid crystal polymer is likely to thermally deteriorate during molding or the viscosity increases during melting and thus the fluidity degrades.

The flow-starting temperature is also referred to as the flow temperature and is a temperature at which the liquid crystal polymer exhibits a viscosity of 4,800 Pa s (48,000 poise) when melted while increasing the temperature at a rate of 4°C/minute under a load of 9.8 MPa (100 kgf/cm²) and extracted from a nozzle having an inner diameter of 1 mm and a length of 10 mm using a capillary rheometer. The flow-starting temperature of the liquid crystal polymer serves as a rough indication of the molecular weight of the liquid crystal polymer (refer to Koide Naoyuki's "Synthesis, molding, and application of liquid crystal polymers", CMC Publishing Co., Ltd., June 5, 1987, p. 95).

In the plate-shaped molded body manufacturing method of the present embodiment, in the liquid crystal polymer resin composition, only one liquid crystal polymer may be used singly or two or more liquid crystal polymers may be jointly used.

### (Plate-shaped filler)

The liquid crystal polymer resin composition that is used in the plate-shaped molded body manufacturing method of the present invention preferably includes a plate-shaped filler. When the molten resin in the liquid crystal polymer resin composition includes a plate-shaped filler, there is a tendency that favorable fluidity is exhibited at the time of injection-molding the plate-shaped molded body.

In addition, compared with a fibrous filler or a particulate filler that is likely to be orientated in the flow direction at the time of causing the molten resin to flow, the plate-shaped filler is not easily oriented at the time of causing the molten resin to flow, and the flow of the resin is likely to be locally hindered in a several-micrometer range. Therefore, in the plate-shaped molded body manufacturing method of the present invention, when the liquid crystal polymer resin composition including the plate-shaped filler is used, the flow of the molten resin is disarrayed in the vicinity of the plate-shaped filler. Therefore, the liquid crystal polymer is not easily oriented locally with respect to the flow direction of the molten resin, and there is a tendency that the warping of the molded body attributed to the orientation of the resin does not easily appear.

As the plate-shaped filler, talc, mica, graphite, wollastonite, barium sulfate, calcium carbonate, and the like are exemplary examples. The mica may be white mica, may be phlogopite, may be fluorine phlogopite, or may be tetrasilisic mica.

In the liquid crystal polymer resin composition that is used in the plate-shaped molded body manufacturing method of the present embodiment, the amount of the plate-shaped filler is preferably 20 parts by mass or more and more preferably 25 parts by mass or more with respect to 100 parts by mass of the liquid crystal polymer.

In addition, in a liquid crystal polymer resin composition of the present embodiment, the amount of the plate-shaped filler is preferably 70 parts by mass or less, more preferably 50 parts by mass or less, and still more preferably 35 parts by mass or less with respect to 100 parts by mass of the liquid crystal polymer.

The upper limit value and the lower limit value of the amount of the plate-shaped filler can be arbitrarily combined.

### (Other components)

The liquid crystal polymer resin composition that is used in the plate-shaped molded body manufacturing method of the present embodiment may contain other components that correspond to neither the liquid crystal polymer nor the plate-shaped filler as long as the effect of the present invention is not impaired.

As examples of the other components, a filler other than the plate-shaped filler, an additive, a resin other than the liquid crystal polymer, and the like are exemplary examples.

These other components may be used singly or two or more other components may be jointly used.

The filler other than the plate-shaped filler may be a fibrous filler or a particulate filler.

In addition, the filler other than the plate-shaped filler may be an inorganic filler or an organic filler.

As examples of the fibrous inorganic filler, glass fibers; carbon fibers such as PAN-based carbon fibers and pitch-based carbon fibers; ceramic fibers such as silica fibers, alumina fibers, and silica alumina fibers; and metal fibers such as stainless steel fibers. In addition, whiskers such as potassium titanate whiskers, barium titanate whiskers, wollastonite whiskers, aluminum borate whisker, silicon nitride whiskers, and silicon carbide whiskers are also exemplary examples.

As examples of the glass fibers, glass fibers manufactured using a variety of methods such as chopped glass fibers and milled glass fibers are exemplary examples.

As examples of the carbon fibers, PAN-based carbon fibers for which polyacrylonitrile is used as a raw material, pitch-based carbon fibers for which coal tar and petroleum pitch is used as a raw material, cellulose-based carbon fibers for which viscose rayon, cellulose acetate, or the like is used as a raw material, vapor-grown carbon fibers for which a hydrocarbon or the like is used as a raw material are exemplary examples. The carbon fiber may be a chopped carbon fiber or a milled carbon fiber.

In the present embodiment, in a case where the liquid crystal polymer resin composition that is used in the plate-shaped molded body manufacturing method includes the fibrous filler, the amount of the fibrous filler is preferably more than 0 parts by mass and 10 parts by mass or less with respect to 100 parts by mass of the liquid crystal polymer.

As examples of the particulate inorganic filler, silica, alumina, titanium oxide, boron nitride, silicon carbide, calcium carbonate, and the like are exemplary examples.

As examples of the additive, a measuring stabilizer, a mold release agent, an antioxidant, a thermal stabilizer, an ultraviolet absorber, an antistatic agent, a surfactant, a flame retardant, and a colorant are exemplary examples.

As examples of the resin other than the liquid crystal polymer, thermoplastic resins other than the liquid crystal polymer such as polypropylene, polyamides, polyesters, polyphenylene sulfide, polyether ketone, polycarbonate, polyphenylene ether, polyetherimide, and fluorine resins; and thermosetting resins such as phenolic resins, epoxy resins, polyimide resins, and cyanate resins are exemplary examples.

The liquid crystal polymer resin composition that is used in the plate-shaped molded body manufacturing method of the present embodiment can be manufactured by mixing the liquid crystal polymer, the plate-shaped filler, and the other components that are used as necessary at the same time or in an appropriate order.

The liquid crystal polymer resin composition that is used in the plate-shaped molded body manufacturing method of the present embodiment is preferably a liquid crystal polymer resin composition that is pelletized by melting and kneading the liquid crystal polymer, the plate-shaped filler, and the other components that are used as necessary using an extruder.

### [Plate-shaped molded body]

A plate-shaped molded body of the present embodiment is an injection molded body for which the liquid crystal polymer resin composition is used as a forming material. As the plate-shaped molded body of the present embodiment, outer plates such as vehicle exterior components or chassis of electronic goods are exemplary examples. As the vehicle exterior components, car roof components are exemplary examples. As the chassis of electronic goods, chassis of home appliances or electronic device chassis are exemplary examples.

In the automotive field, studies are underway regarding weight reduction for the purpose of gas mileage improvement, and the substitution of bonnets, roofs, and the like into resinous components is being studied. In a case where a metal component is substituted with a resinous component, weight can be reduced, but rain sounds are felt loud when rain drops hit the resinous component during rain, which is likely to cause a problem. Therefore, for resinous vehicle exterior components known in the related art, for example, a configuration in which a non-woven fabric is attached to the indoor side of a vehicle to absorb sounds is known.

In contrast, the plate-shaped molded body that is manufactured using the plate-shaped molded body manufacturing method of the present embodiment has an excellent sound absorption property.

From the above-described viewpoint, in a case where the plate-shaped molded body that is manufactured using the plate-shaped molded body manufacturing method of the present embodiment is a vehicle exterior component and the vehicle exterior component is a component having a portion that becomes substantially horizontal with respect to the ground surface such as a bonnet or a roof, a rain sound absorption effect is strongly felt, which is preferable.

In addition, when an outer plate (exterior component) molded using the plate-shaped molded body that is manufactured using the plate-shaped molded body manufacturing method of the present embodiment is used as an electronic goods, the vibration sounds of a motor or the wind sounds of a fan that is stored in the electronic goods are easily absorbed, which is preferable.

According to the manufacturing method of the plate-shaped molded body having the above-described configuration, it is possible to provide a manufacturing method of a plate-shaped molded body that can be preferably molded using a composition including the liquid crystal polymer.

In addition, according to the mold and the runner having the above-described configuration, it becomes possible to preferably carry out the above-described plate-shaped molded body manufacturing method.

Hitherto, examples of the preferred embodiment according to the present invention have been described with reference to the accompanying drawings, but it is needless to say that the present invention is not limited to such examples. A variety of shapes, combinations, and the like of the respective configurational members described in the above-described examples are simply examples and can be modified in various manners on the basis of design requirements and the like within the scope of the gist of the present invention.

### Examples

Hereinafter, the present invention will be described using examples, but the present invention is not limited to these examples.

In the following examples, the following commercially available liquid crystal polyesters (liquid crystal polymers) were used as the liquid crystal polymer.
Resin 1: RB100 (manufactured by Sumitomo Chemical Co., Ltd., flow-starting temperature: 333°C)
Resin 2: S6000 (manufactured by Sumitomo Chemical Co., Ltd., flow-starting temperature: 330°C)
Resin 3: S7000 (manufactured by Sumitomo Chemical Co., Ltd., flow-starting temperature: 286°C)

The flow-starting temperature of the liquid crystal polyester is also referred to as the flow temperature and is a temperature at which the liquid crystal polyester exhibits a viscosity of 4,800 Pa·s (48,000 poise) when melted while increasing the temperature at a rate of 4°C/minute under a load of 9.8 MPa (100 kgf/cm²) and extracted from a nozzle having an inner diameter of 1 mm and a length of 10 mm using a capillary rheometer. The flow-starting temperature of the liquid crystal polymer serves as a rough indication of the molecular weight of the liquid crystal polymer (refer to Koide Naoyuki's "Synthesis, molding, and application of liquid crystal polymers", CMC Publishing Co., Ltd., June 5, 1987, p. 95).

In the present embodiment, as the flow-starting temperature, a value measured using the above-described measurement method was employed.

In addition, in the following examples, the following raw materials were used.

Plate-shaped filler: Mica (AB-25S, manufactured by Yamaguchi Mica Co., Ltd., volume-average particle diameter: 21 µm)
Fibrous filler 1: Glass fiber (CS3J260S, manufactured by Nitto Boseki Co., Ltd., number-average fiber length: 3 mm, number-average fiber diameter: 10 µm)
Fibrous filler 2: Carbon fiber (TR06UB4E, manufactured by Mitsubishi Rayon Co., Ltd., number-average fiber diameter: 7 µm, number-average fiber length: 6 mm)

### (Examples 1 to 6)

Liquid crystal polymer resin compositions obtained by mixing the liquid crystal polyester, the plate-shaped filler, and the fibrous filler in proportions shown in Table 1 below were supplied to a co-rotating twin screw extruder having a screw diameter of 30 mm ("PCM-30HS" manufactured by Ikegai Corp) and pelletized by melting and kneading, thereby obtaining pellets of liquid crystal polyester compositions of Examples 1 to 6. The units of numerical values in the table are "parts by mass".

**[Table 1]**

| | Example 1 | Example 2 | Example 3 | Example 4 | Example 5 | Example 6 |
|---|---|---|---|---|---|---|
| Resin 1 (RB100) | 20 | 35 | 7 | 11 | 21 | 20 |
| Resin 2 (S6000) | 44 | 65 | 93 | 89 | 79 | 80 |
| Resin 3 (S7000) | 36 | - | - | - | - | - |
| Plate-shaped filler (mica) | 36 | 35 | 37 | 36 | 49 | 32 |
| Fibrous filler 1 (glass fiber) | 7 | - | 12 | 15 | - | - |
| Fibrous filler 2 (carbon fiber) | - | 10 | - | - | - | - |

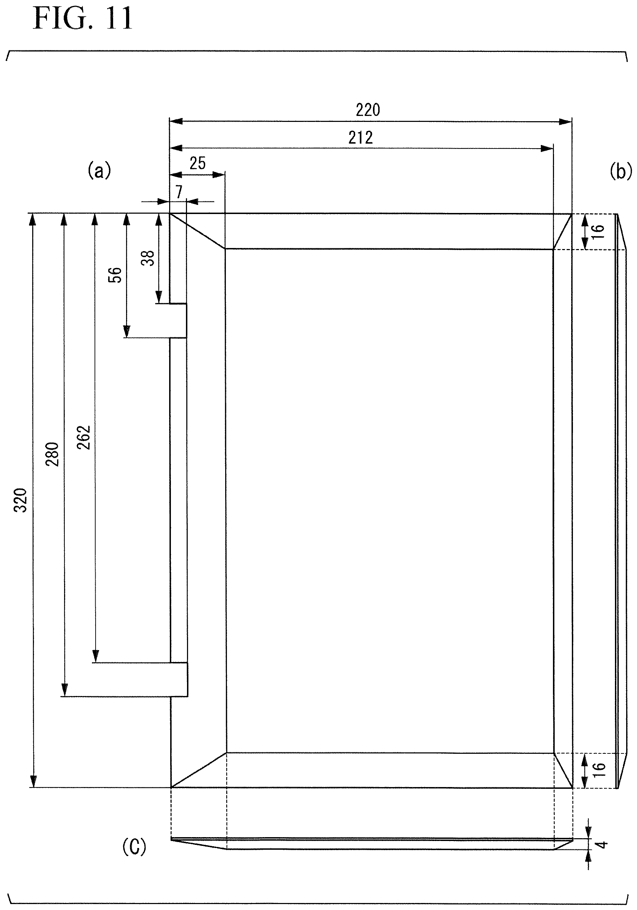

In Examples 1 to 5, PC chassis shown in FIG. 11 were produced by injection-molding pellets obtained using a first mold. FIG. 11 is a trihedral figure of the PC chassis. FIG. 11(a) is a plan view, FIG. 11(b) is a front view, and FIG. 11(c) is a side view. The PC chassis corresponds to the plate-shaped molded body in the present invention. The units of numerical values shown in FIG. 11 are "mm".

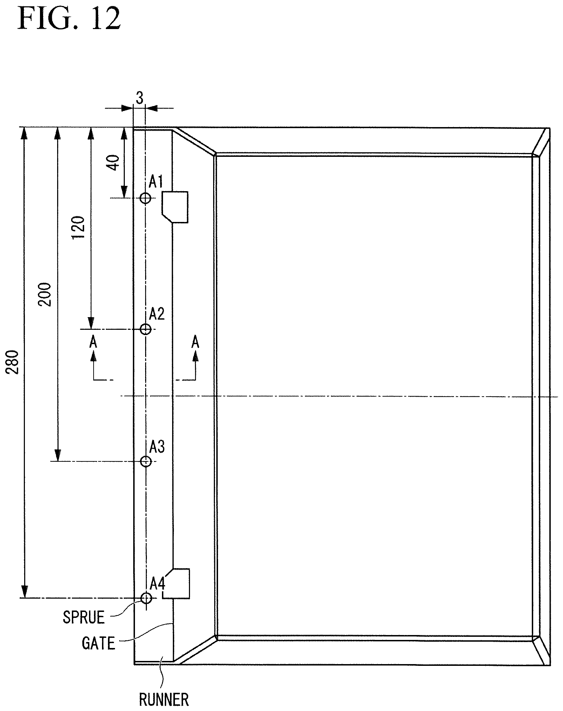

Injection molding conditions are as described below. In addition, the location of a gate is as shown in FIG. 12 that corresponds to FIG. 11(a).

### (Molded body)

Maximum projected area of molded body: 699.6 cm²
Average thickness of molded body: 0.05 cm

### (Molding conditions)

Molding machine: J450AD-1400H manufactured by The Japan Steel Works, Ltd.
Cylinder temperature: 350°C
Mold temperature: 100°C
Injection rate: 500 cm³/s
Hot runner temperature: 350°C
Sprue shape: Valve gate, gate diameter ϕ: 3 mm

In addition, in Example 6, a PC chassis was produced by injection-molding pellets obtained using a second mold that was different from the first mold. The second mold was identical to the first mold except for the fact that a plurality of pins was provided in a cavity and the location of the gate.

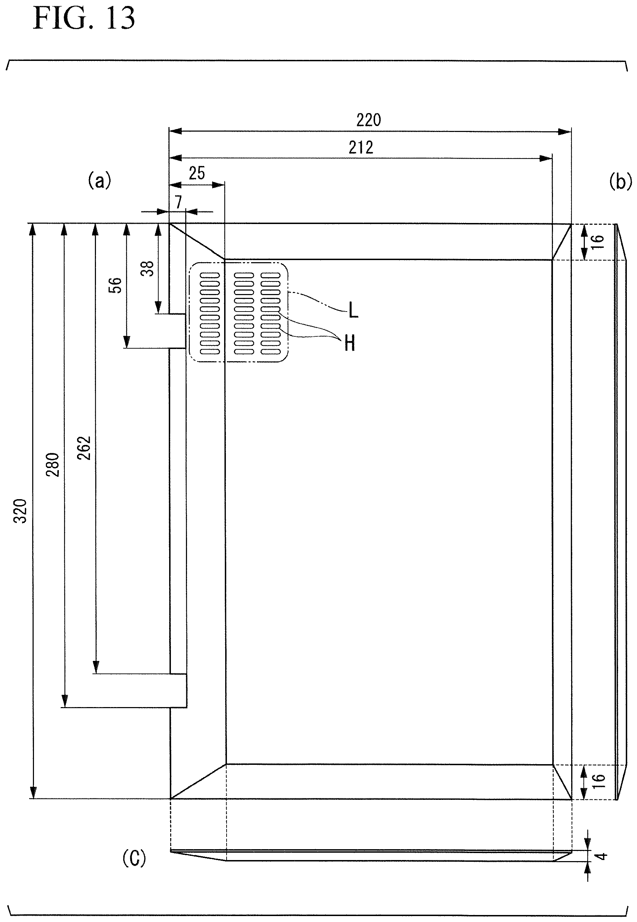

FIG. 13 is a trihedral figure of the PC chassis and a view that corresponds to FIG. 11. FIG. 13(a) is a plan view, FIG. 13(b) is a front view, and FIG. 13(c) is a side view. The PC chassis corresponds to the plate-shaped molded body in the present invention. The units of numerical values shown in FIG. 13 are "mm".

The PC chassis obtained using the second mold had a plurality of through holes H having a shape complementary to a plurality of columnar substances. The plurality of through holes H was densely provided and serves as grid holes L.

The through hole H has a rectangular shape with round corners in a planar view and is 10 mm in the long-side direction and 1 mm in the short-side direction. The plurality of through holes H are arranged in 22 rows in the long-side direction of the through hole H and in 3 columns in the short-side direction of the through hole H, that is, in a 22x3 array.

The intervals (pitches) between the through holes H are set to be 2 mm in the long-side direction of the through hole H and 1 mm in the short-side direction of the through hole H.

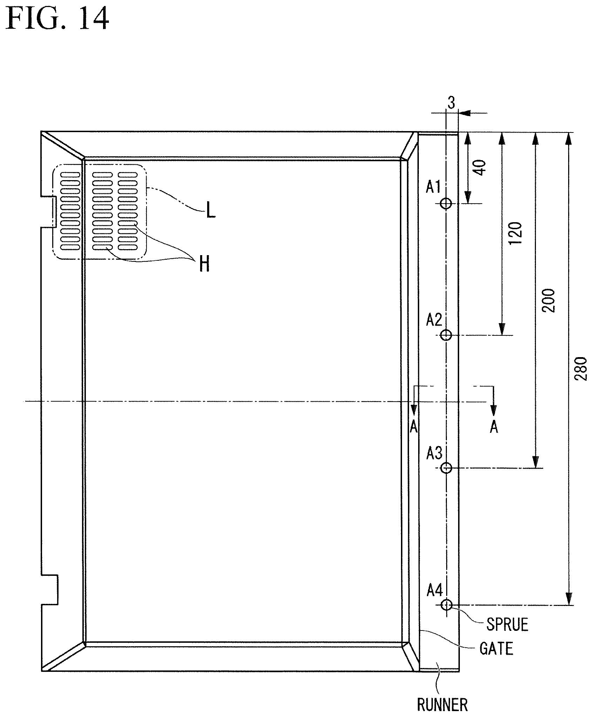

Injection molding conditions are identical to those of Examples 1 to 5. In addition, the location of a gate is as shown in FIG. 14 that corresponds to FIG. 13(a). As shown in FIG. 14, the gate is provided at a side far from the grid holes L.

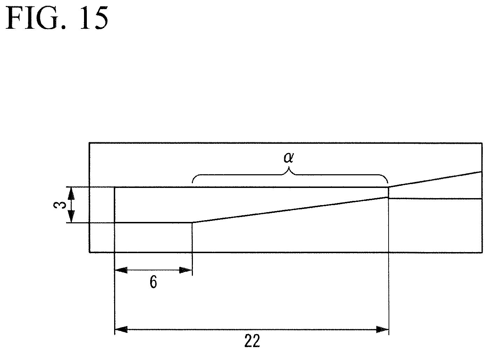

The shape of the gate used in Examples 1 to 6 is as shown in FIG. 15. FIG. 15 is an arrow cross-sectional view in a direction of a line A-A in FIG. 12 or 14. The units of numerical values shown in the drawing are "mm". In the drawing, a portion indicated by a reference sign α corresponds to the above-described "wedge-shaped portion".

The obtained molded bodies were evaluated as described below.

### (Measurement of DTUL)

The pellet-shaped liquid crystal polyester composition was dried and then injection-molded using an injection molding machine (PS40E-5ASE, manufactured by Nissei Plastic Industrial Co., Ltd.), thereby obtaining a 127 mm-long, 12.7 mm-wide, and 6.4 mm-thick test specimen.

The deflection temperature under load of the obtained test specimen was measured at the deflection temperature under load according to ASTM D 648 and a load of 1.82 MPa.

### [Evaluation of warping]

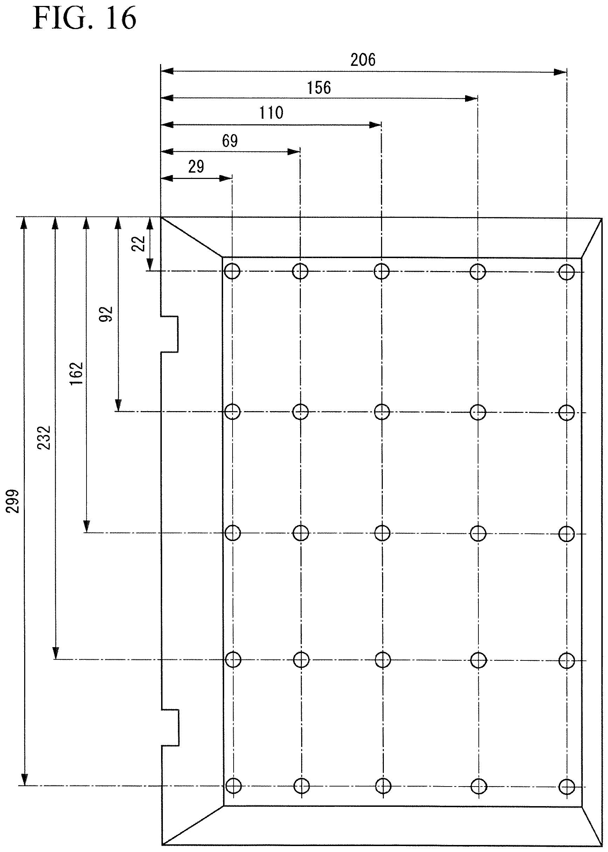

The molded body was placed on a flat plate with the bottom surface of the molded body facing the flat plate, and the heights in the thickness direction from the flat plate were measured at 25 measurement points shown in FIG. 16. The maximum warping amount of the molded body was defined as the difference between the largest value and the smallest value among the 25 points. The 25 measurement points are present in a planar portion of the molded body. Therefore, in a case where the molded body does not warp, that is, the molded body is molded as designed, the maximum warping amount according to the above-described definition is zero.

Regarding warping, when the maximum warping amount was 5 mm or less, the molded body was determined to warp only slightly and be a favorable molded body.

The evaluation results are shown in Table 2.

**[Table 2]**

| | Example 1 | Example 2 | Example 3 | Example 4 | Example 5 | Example 6 |
|---|---|---|---|---|---|---|
| DTUL (°C) | 233 | - | - | - | 254 | - |
| Warping of PC chassis (mm) | 1.58 | 1.64 | 3.41 | 4.03 | 1.58 | 4.63 |

As a result of the evaluation, it was found that the PC chassis molded using the manufacturing methods of Examples 1 to 6 warped only slightly and were favorable chassis.

From the above-described results, it has been clarified that the present invention is useful.

### Reference Signs List

100, 200 ··· MOLD, 110 ··· CAVITY, 120 ··· GATE, 130 ··· RUNNER, 140 ··· SPRUE, 150 ··· SUB GATE

## Claims

1. A plate-shaped molded body manufacturing method comprising:
a step of injection-molding a liquid crystal polymer resin composition using a mold that satisfies conditions (i) to (iii) below,
(i) the mold includes a cavity and a gate that is connected to the cavity, the cavity has a shape that corresponds to the plate-shaped molded body, and the gate is provided across approximately an entire width of one side of the cavity,
(ii) the mold includes a runner that is connected to the gate, and the runner extends along approximately an entire width of the gate, and
(iii) in a cross section perpendicular to an extension direction of the runner, a shape of an inside space of the runner has a wedge-shaped portion in which a width of the inside space gradually decreases toward the gate.

2. The plate-shaped molded body manufacturing method according to Claim 1,
wherein the mold has a plurality of sprues through which a resin is supplied to the runner.

3. The plate-shaped molded body manufacturing method according to Claim 2,
wherein a direction in which the resin flows into the runner from the sprues and a direction in which the resin flows into the cavity from the runner intersect with each other.

4. The plate-shaped molded body manufacturing method according to any one of Claims 1 to 3,
wherein the mold has a pin that protrudes into the cavity, and the gate is provided at, between a pair of facing sides of the cavity in a planar view, a side farther from the pin.

5. The plate-shaped molded body manufacturing method according to Claim 4,
wherein the pin is flat in a planar view, and the mold has the gate in a long-axis direction of the pin in the planar view.

6. The plate-shaped molded body manufacturing method according to Claim 4 or 5,
wherein the pin swells and bends toward the gate in a planar view.

7. The plate-shaped molded body manufacturing method according to any one of Claims 4 to 6,
wherein the mold has a plurality of the pins, and at least some of the plurality of pins are arrayed in an extension direction of the gate.

8. A mold that satisfies conditions (i) to (iii) below,
(i) the mold includes a cavity and a gate that is connected to the cavity, the cavity has a shape that corresponds to the plate-shaped molded body, and the gate is provided across approximately an entire width of one side of the cavity,
(ii) the mold includes a runner that is connected to the gate, and the runner extends along approximately an entire width of the gate, and
(iii) in a cross section perpendicular to an extension direction of the runner, a shape of an inside space of the runner has a wedge-shaped portion in which a width of the inside space gradually decreases toward the gate.

9. A runner that is used in a mold for forming a plate-shaped molded body,
wherein the runner extends along approximately an entire width of one side of a cavity of the mold and is connected to a gate that is provided across approximately the entire width of the one side, and a shape of an inside space in a cross section perpendicular to the extension direction has a wedge-shaped portion in which a width of the inside space gradually decreases toward the gate.
